# EUROPÄISCHE PATENTSCHRIFT

(11) **EP 1 924 476 B1**
(45) Veröffentlichungstag und Bekanntmachung des Hinweises auf die Patenterteilung: **16.12.2009**
(21) Anmeldenummer: 06776926.5
(22) Anmeldetag: 17.08.2006
(51) Int. Cl.: B60W 30/16, B60W 10/18, B60W 10/06

(54) **VERFAHREN ZUM WARNEN DES FAHRERS EINES MIT EINEM FAHRGESCHWINDIGKEITSREGELSYSTEM AUSGESTATTETEN KRAFTFAHRZEUGS**
METHOD FOR WARNING THE DRIVER OF A MOTOR VEHICLE WHICH IS EQUIPPED WITH A CRUISE CONTROL SYSTEM
PROCEDE D'ALERTE AU CONDUCTEUR D'UN VEHICULE EQUIPE D'UN REGULATEUR DE VITESSE

(30) Priorität: 17.09.2005 DE 102005044455
(43) Veröffentlichungstag der Anmeldung: 28.05.2008
(73) Patentinhaber: Bayerische Motoren Werke Aktiengesellschaft, 80809 München (DE)
(72) Erfinder: STEINLE, Joachim, 80993 München (DE); TSCHERNOSTER, Oliver, 80939 München (DE); ADIPRASITO, Bartono, 85467 Neuching (DE)
(86) Internationale Anmeldenummer: PCT/EP2006/008127
(87) Internationale Veröffentlichungsnummer: WO 2007/031169

(56) Entgegenhaltungen:
- EP-A- 0 992 386
- EP-A2- 0 348 691
- EP-A2- 0 976 628
- WO-A-03/076226
- FR-A1- 2 789 950
- US-A- 4 495 484

## Beschreibung

Die Erfindung bezieht sich auf ein Verfahren zum Warnen des Fahrers eines Kraftfahrzeugs, das mit einem abstandsbezogenen Fahrgeschwindigkeitsregelsystem ausgestattet ist, nach dem Oberbegriff des Patentanspruchs 1.

Kraftfahrzeuge mit einem abstandsbezogenen Fahrgeschwindigkeitsregelsystem können heute bereits bei einigen Herstellern erworben werden. Ein derartiges bspw. bei der Anmelderin der vorliegenden Patentanmeldung unter der Bezeichnung "Active Cruise Control" angebotenes System ermöglicht es, das Kraftfahrzeug unter Einhaltung eines gewünschten Abstands zu einem vor diesem fahrenden Kraftfahrzeug (dieses wird als Zielobjekt bezeichnet) mit einer gewünschten oder einer entsprechend geringeren Geschwindigkeit automatisch zu bewegen. Vom Prinzip her ist dabei die allgemein bekannte Fahrgeschwindigkeitsregelung, die eine bestimmte vorgegebene Geschwindigkeit einhält, um eine zusätzliche Abstandsregelfunktion erweitert, so dass der Einsatz einer solchen "aktiven" Fahrgeschwindigkeitsreglung auch im dichten Autobahn- und Landstrassenverkehr möglich wird. Diese sog. "aktive Fahrgeschwindigkeitsregelung" hält die vorgegebene Wunschgeschwindigkeit, wenn die eigene Fahrspur frei ist. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit, bspw. durch Veranlassen eines geeigneten Bremsmoments, an die Geschwindigkeit des vorausfahrenden Kraftfahrzeugs bzw. Zielobjekts derart angepasst, dass eine in der "aktiven Fahrgeschwindigkeitsreglung" bzw. im entsprechenden Geschwindigkeits-Regelsystem enthaltene Abstandsregelung automatisch einen situationsgerechten Abstand zum vorausfahrenden Kraftfahrzeug bzw. Zielobjekt einhält.

Bei derartigen Systemen ist jedoch die erzielbare Bremswirkung, die durch das veranlasste Bremsmoment erzeugt wird, auf einen Maximalwert begrenzt. Für den Fall, dass die erzielbare Bremswirkung nicht ausreichend ist, um beispielsweise in sicherem Abstand hinter einem vorausfahrenden Fahrzeug zum Stehen zu kommen, ist es erforderlich, dass der Fahrer auf diesen Zustand aufmerksam gemacht wird. Dies kann bspw. durch ein akustisches Signal erfolgen.

Aus der DE 198 57 992 ist eine Vorrichtung zur kinästhetischen Signalisierung an den Fahrer eines Kraftfahrzeugs bekannt, die ausgelöst wird, wenn eine durch eine Funktionsstörung bedingte oder eine gewollte Abschaltung des abstandsbezogenen Fahrgeschwindigkeitsregelsystems bevorsteht, oder wenn eine erforderliche Bremswirkung durch das Regelsystem nicht veranlasst werden kann. Die kinästhetische Signalisierung erfolgt durch eine Ansteuerung der Verzögerungseinrichtung in der Weise, dass das Kraftfahrzeug durch die Ansteuerung der Verzögerungseinrichtung eine für den Fahrer spürbare schwankende Verzögerung erfährt.

Derartige "Active Cruise Control" Systeme sind jedoch nur in einem Geschwindigkeitsbereich von 30 - 180 km/h nutzbar, während im Geschwindigkeitsbereich unterhalb von 30 km/h dieses System nicht aktivierbar ist bzw. sich nach einem bestimmten Algorithmus automatisch abschaltet. Auch können stehende Zielobjekte nicht oder nur bedingt für die Regelung verwendet werden.

Um ein Geschwindigkeitsregel-System mit Abstandssensorik auch im Geschwindigkeitsbereich unterhalb bspw. 30 km/h insbesondere in Stausituationen nutzen zu können, setzt dies einen durch zusätzliche Sensoren erweiterten Sensorsichtbereich voraus. Weiterhin sollte ein Algorithmus zwischen relevanten stehenden und fahrenden Zielobjekten differenzieren können. Eine mögliche Systemausprägung könnte darin bestehen, dass zwischen einem herkömmlichen Regel-Bereich, in welchem keine Reaktion auf stehende Ziele erfolgt, und einem Stop&Go-Bereich, in dem auf stehende Zielobjekte reagiert wird, unterschieden wird. Dieser sog. Stop&Go-Bereich kann geschwindigkeitsmäßig nach oben durch einen Grenzwert bspw. in der Größenordnung von 30 km/h beschränkt sein. Ein derart erweitertes Abstandsbezogenes Fahrgeschwindigkeitsregelsystem ist bspw. aus der DE 101 51 717 A1 bekannt.

Bei derartigen Systemen bestünde ohne zusätzliche technische Maßnahmen jedoch die Möglichkeit, dass der Fahrer, während das Kraftfahrzeug durch ein durch das abstandsbezogene Fahrgeschwindigkeitsregelsystem veranlasstes Bremsmoment im Stillstand gehalten wird, aussteigt und dabei vergisst, dass das Fahrzeug nur aufgrund der aktiven Regelung im Stillstand gehalten wird. Bei heutigen Systemen wird der Fahrer auf diesen Umstand meist mittels eines akustischen und/oder optischen Signals hingewiesen.

Ein gattungsbildendes System wird in der EP 0 982 386 beschrieben. Aufgabe der Erfindung ist es, ein im Hinblick auf die Wahrnehmbarkeit des Warnsignals Verbessertes Verfahren zum Warnen des Fahrers bei einer Gefahrensituation, wie sie eben beschrieben wurde, anzugeben.

Diese Aufgabe wird durch ein Verfahren nach Patentanspruch 1 gelöst. Vorteilhafte Weiterbildungen sind die Gegenstände der abhängigen Ansprüche.

Das erfindungsgemäße Verfahren zum Warnen des Fahrers eines Kraftfahrzeugs, das mit einem abstandsbezogenen Fahrgeschwindigkeitsregelsystem ausgestattet ist, wobei das Kraftfahrzeug während der abstandsbezogenen Fahrgeschwindigkeitsregelung mittels eines durch das abstandsbezogene Fahrgeschwindigkeitsregelsystem veranlassten Bremsmoments im Stillstand gehalten wird, und wobei ein Verlassen des Kraftfahrzeugs oder eine Verlassensabsicht des Fahrers zum Verlassen des Kraftfahrzeugs erkennbar ist, zeichnet sich dadurch aus, dass im Falle eines Erkennens des Verlassens des Kraftfahrzeugs oder beim Erkennen der Verlassensabsicht das veranlasste Bremsmoment derart verändert bzw. moduliert wird, dass das Kraftfahrzeug eine für den Fahrer spürbare Bewegung bzw. Schwingung erfährt.

Die Bewegung des Kraftfahrzeugs muss nicht notwendigerweise zu einer signifikanten Positionsveränderung des Kraftfahrzeugs führen. Vielmehr sollte die Veränderung bzw. Modulierung des Bremsmoments lediglich zu einem Schaukeln der Karosserie führen, wobei das Kraftfahrzeug selbst im Wesentlichen weiterhin an der ursprünglichen Position bleibt.

Durch diese Bewegung des Kraftfahrzeugs bzw. der Karosserie soll der Fahrer darauf aufmerksam gemacht werden, dass das Fahrzeug lediglich aufgrund der abstandsbezogenen Fahrgeschwindigkeitsregelung des Regelsystems im Stillstand gehalten wird, und nicht aufgrund einer herkömmlichen Handlung, wie bspw. der Betätigung einer Feststellbremse. Somit hat der Fahrer selbst die Möglichkeit, ein unbeabsichtigtes Anrollen des Fahrzeugs, z. B. aufgrund eines Defektes im Fahrgeschwindigkeitsregelsystem, zu verhindern.

Vorteilhafterweise wird das veranlasste Bremsmoment zu Warnung derart verändert bzw. moduliert, dass das veranlasste Bremsmoment zumindest einmalig für einen vorgegebenen Zeitraum, der sehr kurz sein sollte, reduziert wird. Dies bedeutet, dass die an den gebremsten Rädern anliegende Bremskraft für diesen Zeitraum ebenfalls kurz reduziert wird und nach diesem Zeitraum wieder in der ursprünglichen Weise anliegt. Dadurch erfährt die Karosserie des Kraftfahrzeugs eine Bewegung in Form eines Rucks, der für den Fahrer wahrnehmbar ist.

Vorteilhafterweise kann während dieses Zeitraums das Bremsmoment auch auf Null reduziert werden. Dabei sollte der Zeitraum so gewählt werden, dass es auf der einen Seite zu keinem unbeabsichtigten Anrollen des Fahrzeugs kommt und auf der anderen Seite die resultierende Fahrzeugbewegung für den Fahrer als Warnung wahrnehmbar ist.

Diese Reduzierung des Bremsmoments kann einmalig oder auch mehrmalig in kurzen Abständen hintereinander erfolgen, wodurch das Kraftfahrzeug bzw. die Karosserie des Kraftfahrzeugs in hochfrequente Schwingung versetzt wird.

Vorteilhafterweise wird die Absicht des Fahrers zum Verlassen des Kraftfahrzeugs durch Auswerten eines Gurtkontaktsignals und/oder durch Auswerten eines Türschließsignals und/oder durch Auswerten der Signale eines Innenraumsensierungssystems oder durch Auswerten des Signals einer Lenkradberührerkennungseinrichtung erkannt. Derartige Auswertungen bieten den Vorteil, dass die Signale bereits im Kraftfahrzeug vorliegen, da sie für andere Steuerungen und/oder Regelung ausgewertet werden. Eine derartige Auswertung stellt somit eine einfache und kostengünstige Variante zum Erkennen, dass der Fahrer beabsichtigt das Fahrzeug zu verlassen, dar.

Bei dem hier genannten Innenraumsensierungssystem kann es sich um ein System handeln, das lediglich Objekte und eventuell deren Position im Fahrzeuginnenraum detektiert, oder aber auch um ein System, das die detektierten Objekte auch klassifizieren kann. Zu der Gruppe der erst genannten Innenraumsensierungssysteme gehören beispielsweise herkömmliche Diebstahlwarnanlagen, wie sie heute in vielen Fahrzeugen vorhanden sind. Zu der Gruppe der zweit genannten Innenraumsensierungssysteme gehören beispielsweise Innenraumüberwachungssysteme, die in der Regel die Signale einer Videokamera auswerten.

Bei der Lenkradberührerkennungseinrichtung kann es sich um eine Lenkradsensorik handeln, die anzeigt, ob der Fahrer die Hände bzw. zumindest eine Hand am Lenkrad hat.

Durch all diese Signale ist ein frühzeitiges Erkennen der Verlassensabsicht möglich, was den Vorteil bietet, dass der Fahrer auch mit sehr hoher Wahrscheinlichkeit noch die Bewegung des Kraftfahrzeugs wahrnimmt und darauf reagieren kann.

Zusätzlich oder alternativ kann auch ein Signal einer (mechanisch arbeitenden) Sitzbelegungserkennung des Fahrersitzes ausgewertet werden, und, falls kein belegter Sitz erkannt wird, die Veränderung bzw. Modulierung des veranlassten Bremsmoments erfolgen.

Zusätzlich zu dieser kinästhetischen Signalisierung kann vorteilhafterweise ein akustisches und/oder optisches und/oder haptisches Warnsignal für den Fahrer erzeugt werden. Bei einer akustischen Warnung kann es sich beispielsweise um einen über die Lautsprecher verbreiteten Signalton handeln, bei einem optischen Warnsignal um eine blinkende Anzeige im Display vor dem Fahrer oder um eine LED an der Fahrertür. Ein haptisches Warnsignal kann beispielsweise zu einem Vibrieren des Lenkrads führen, was jedoch nur dann zu dem gewünschten Erfolg führen wird, wenn der Fahrer zumindest noch eine Hand am Lenkrad hat.

Vorteilhafterweise kann auch eine mehrstufige Warnung erzeugt werden. So wäre es beispielsweise denkbar, dass in einer ersten Warnstufe, die erreicht wird, wenn eine Absicht des Fahrers zum Verlassen des Fahrzeugs erkannt wird, lediglich eine optische Warnung erfolgt und in einer zweiten Stufe, die erreicht wird, wenn ein tatsächliches Verlassen des Kraftfahrzeugs erkannt wird, eine Kombination aus einer akustischen und der erfindungsgemäßen kinästhetischen Warnung. Es ist jedoch auch jede andere Kombination aus optischer, akustischer, haptischer bzw. kinästhetischer Warnung möglich.

Vorteilhafterweise kann im Falle eines Erkennens des Verlassens oder der Verlassensabsicht des Fahrers, das Kraftfahrzeug durch gezielte Ansteuerung von Antriebsaktuatoren in Schwingungen versetzt wird. Durch diese Erweiterung kann der Fahrer auch dann gewarnt werden, wenn das Kraftfahrzeug leicht bergauf stehend gehalten wird. Ein Öffnen der Bremse würde hier nicht zwangsläufig zu einem spürbaren Ruck führen. Wird gleichzeitig mit einer öffnenden Bremse der Antrieb angesteuert, kann ein gewisser Vortrieb sichergestellt und somit ein Ruck auch in dieser Situation dargestellt werden. Gleiches gilt z.B. auch für die Ebene, wenn kein Gang eingelegt ist.

## Patentansprüche

1. Verfahren zum Warnen des Fahrers eines Kraftfahrzeugs, das mit einem abstandsbezogenen Fahrgeschwindigkeitsregelsystem ausgestattet ist, wobei das Kraftfahrzeug während der abstandsbezogenen Fahrgeschwindigkeitsregelung mittels eines durch das abstandsbezogene Fahrgeschwindigkeitsregelsystem veranlassten Bremsmoments im Stillstand gehalten wird, und wobei ein Verlassen des Kraftfahrzeugs oder eine Verlassensabsicht des Fahrers zum Verlassen des Kraftfahrzeugs erkennbar ist, **dadurch gekennzeichnet, dass** im Falle eines Erkennens des Verlassens oder der Verlassensabsicht des Fahrers das veranlasste Bremsmoment derart verändert wird, dass das Kraftfahrzeug eine für den Fahrer spürbare Bewegung erfährt.

2. Verfahren nach Patentanspruch 1, **dadurch gekennzeichnet, dass** im Falle eines Erkennens des Verlassens oder der Verlassensabsicht des Fahrers das veranlasste Bremsmoment zumindest einmalig für einen vorgegebenen Zeitraum reduziert wird.

3. Verfahren nach Patentanspruch 1 oder 2, **dadurch gekennzeichnet, dass** das Bremsmoment zumindest zeitweise auf Null reduziert wird.

4. Verfahren nach einem der vorangegangenen Patentansprüche, **dadurch gekennzeichnet, dass** im Falle eines Erkennens des Verlassens oder der Verlassensabsicht des Fahrers zusätzlich ein optisches und/oder akustisches und/oder haptisches Warnsignal erzeugt wird, wobei die Warnung vorteilhafterweise in mehreren Eskalationsstufen erfolgt.

5. Verfahren nach einem der vorangegangenen Patentansprüche, **dadurch gekennzeichnet, dass** die Absicht des Fahrers zum Verlassen des Kraftfahrzeugs durch Auswerten eines Gurtkontaktsignals und/oder durch Auswerten eines Türschließsignals und/oder durch Auswerten der Signale einer Lenkradberührungssensorik und/oder durch Auswerten der Signale eines Innenraumsensierungssystems und/oder durch Auswerten des Signals einer Lenkradberührerkennungseinrichtung erkannt wird.

6. Verfahren nach einem der vorangegangenen Patentansprüche, **dadurch gekennzeichnet, dass** das Verlassen des Kraftfahrzeugs vom Fahrer durch Auswerten eines Signals einer Sitzbelegungserkennungseinrichtung erkannt wird.

7. Verfahren nach einem der vorangegangenen Patentansprüche, **dadurch gekennzeichnet, dass** im Falle eines Erkennens des Verlassens oder der Verlassensabsicht des Fahrers das Kraftfahrzeug durch gezielte Ansteuerung von Antriebsaktuatoren in Schwingungen versetzt wird.

## Claims

1. A method for warning the driver of a motor vehicle equipped with a distance-related cruise control system, wherein the vehicle is maintained at a standstill during the distance-related cruise control by means of a braking torque applied by the distance-related cruise control system, and wherein it is possible to detect the driver leaving the motor vehicle or having the intention of leaving the motor vehicle, **characterised in that** if it is detected that the driver is leaving or has the intention of leaving, the applied braking torque is changed in such a way that the motor vehicle undergoes a movement which can be noticed by the driver.

2. A method according to claim 1, **characterised in that** if it is detected that the driver is leaving or has the intention of leaving, the applied braking torque is reduced at least once for a predetermined period.

3. A method according to claim 1 or 2, **characterised in that** the braking torque is reduced at least temporarily to zero.

4. A method according to any one of the preceding claims, **characterised in that** if it is detected that the driver is leaving or has the intention of leaving, an optical and/or acoustic and/or haptic warning signal is additionally generated, the warning advantageously taking place in a plurality of escalation steps.

5. A method according to any one of the preceding claims, **characterised in that** the intention of the driver to leave the motor vehicle is detected by evaluating a belt contact signal and/or by evaluating a door closing signal and/or by evaluating the signals of a steering wheel contact sensor system and/or by evaluating the signals of an interior sensing system and/or by evaluating the signal of a steering wheel contact detection device.

6. A method according to any one of the preceding claims, **characterised in that** it is detected that the driver is leaving the motor vehicle by evaluating a signal of a seat occupation detection device.

7. A method according to any one of the preceding claims, **characterised in that** if it is detected that the driver is leaving or has the intention of leaving, the motor vehicle is made to oscillate by targeted activation of drive actuators.

## Revendications

1. Procédé d'alerte du conducteur d'un véhicule équipé d'un système de régulation de vitesse tenant compte de la distance,
le véhicule étant maintenu à l'arrêt par un couple de freinage demandé par le système de régulation de vitesse tenant compte de la distance pendant la régulation de vitesse, et
on détecte le fait que le conducteur quitte le véhicule ou a l'intention de le quitter,
**caractérisé en ce que**
on modifie le couple de freinage pour que le véhicule exécute un mouvement perceptible par le conducteur, dans le cas de la détection du fait que le conducteur quitte le véhicule ou a l'intention de quitter le véhicule.

2. Procédé selon la revendication 1,
**caractérisé en ce qu'**
on réduit le couple de freinage appliqué, au moins une fois pendant une durée prédéfinie, au cas où l'on détecte le fait que le conducteur quitte le véhicule ou a l'intention de le quitter.

3. Procédé selon la revendication 1 ou 2,
**caractérisé en ce qu'**
on réduit le couple de freinage à zéro au moins de temps en temps.

4. Procédé selon les revendications précédentes,
**caractérisé en ce qu'**
on génère un signal d'alerte optique et/ou acoustique et/ou haptique, l'alerte se faisant avantageusement suivant plusieurs niveaux d'escalade, en cas où on détecte le fait que le conducteur quitte le véhicule ou a l'intention de le quitter.

5. Procédé selon les revendications précédentes,
**caractérisé en ce qu'**
on reconnaît l'intention du conducteur de quitter le véhicule par l'exploitation du signal de contact de la ceinture de sécurité et/ou d'un signal de fermeture de portière et/ou des signaux d'un capteur de contact de volant et/ou des signaux d'un système de détection de l'habitacle et/ ou du signal d'une installation de détection du contact du volant.

6. Procédé selon les revendications précédentes,
**caractérisé en ce qu'**
on détecte le fait que le conducteur quitte le véhicule par l'exploitation d'un signal de l'installation de détection d'occupation d'un siège.

7. Procédé selon les revendications précédentes,
**caractérisé en ce qu'**
on commande de manière ciblée des actionneurs pour générer des vibrations, au cas ou l'on détecte le fait que le conducteur quitte le véhicule ou a l'intention de le quitter.
